# EUROPEAN PATENT SPECIFICATION

(11) **EP 2 242 642 B1**
(45) Date of publication and mention of the grant of the patent: **08.02.2012**
(21) Application number: 07866580.9
(22) Date of filing: 21.12.2007
(51) Int. Cl.: B29D 30/70, B29D 30/28, B29D 30/24

(54) **PROCESS AND PLANT FOR BUILDING TYRES FOR VEHICLE WHEELS**
VERFAHREN UND ANLAGE ZUM BAU VON REIFEN FÜR FAHRZEUGRÄDER
PROCÉDÉ ET INSTALLATION DE FABRICATION DE PNEUS POUR ROUES DE VÉHICULE

(43) Date of publication of application: 27.10.2010
(73) Proprietor: Pirelli Tyre S.P.A., 20126 Milano (IT)
(72) Inventor: MARCHINI, Maurizio, I-20126 Milano (IT); LO PRESTI, Gaetano, I-20126 Milano (IT); MUSITELLI, Ezio, I-20126 Milano (IT)
(74) Representative: Castiglia, Paolo
(86) International application number: PCT/IB2007/004066
(87) International publication number: WO 2009/081221

(56) References cited:
- EP-A- 0 102 316
- EP-A- 0 465 828
- EP-A- 0 468 738
- EP-A- 1 127 683
- EP-A- 1 767 337
- DE-A1- 2 516 419
- DE-A1- 2 623 830
- GB-A- 522 424
- JP-A- 57 098 342
- US-A- 4 063 987

## Description

The present invention relates to a process for building tyres for vehicle wheels.

The present invention also relates to an apparatus for building tyres for vehicle wheels and the relevant building plant usable for carrying out the building process mentioned above.

A tyre generally comprises a toroidally ring-shaped carcass including one or more carcass plies, strengthened with reinforcing cords lying in substantially radial planes (a radial plane contains the rotation axis of the tyre). Each carcass ply has its ends integrally associated with at least one metal reinforcing annular structure, known as bead core, constituting the reinforcing at the beads, i.e. at the radially inner ends of the tyre, having the function of enabling the assembling of the tyre with a corresponding mounting rim. Placed crown wise to said carcass is a band of elastomeric material, called tread band, within which, at the end of the moulding and vulcanization steps, a raised pattern is formed for ground contact. A reinforcing structure, generally known as belt structure, is placed between the carcass and the tread band. Such structure usually comprises, in the case of car tyres, at least two radially superposed layers of rubberised fabric provided with reinforcing cords, usually of metal material, placed parallel to each other in each layer and in a crossed relationship with the cords of the adjacent layer, preferably symmetrically placed with respect to the equatorial plane of the tyre. Preferably, the belt structure further comprises at a radially outer position thereof, at least on the ends of the underlying belt layers, also a third layer of textile or metallic cords, circumferentially disposed (at zero degrees).

The belt structure and the tread band together form the so called "crown structure" of the tyre.

Finally, in tyres of the tubeless type, a radially inner layer, called liner, is present which has imperviousness features for ensuring the air-tightness of the tyre itself.

To the aims of the present description and in the following claims, by the term "elastomeric material" it is intended a composition comprising at least one elastomeric polymer and at least one reinforcing filler. Preferably, such composition further comprises additives such as cross-linking and/or plasticizing agents. By virtue of the cross-linking agents, such material may be cross-linked by heating, so as to form the final manufactured article.

EP 0 015 113 A1 describes a machine and a method for folding the circumferential edge portions of a tyre component. The folding machine comprises: an annular deck having a cylindrical support surface for the component and a precisely formed sharply shouldered peripheral deck edge, and a bladder assembly positioned axially and radially inwardly of said deck edge cooperating when inflated with said deck edge to fold the overhanging circumferential edge portion of the component at such deck edge.

JP 57098342 describes the assembly of belt layers of a tyre. The layers are wound on a drum flange and both ends of each layer are folded, moving contrast rollers in contact with the layer surfaces, while chambers expansible to both end surfaces of the drum flange are expanded. The rollers are then separated, the layers are folded towards the drum flange and a roller is applied on the belt layer to squeeze the layer by the entire circumferential extension thereof in a position coinciding with the end of the drum flange, so that the width of the drum flange and that of the belt after the folding step coincide with each other.

DE 26 23 830 discloses a method and a device for preparing inserts partially folded onto each other comprising embedded reinforcements for pneumatic vehicle tyres. The invention provides for using form rings in a direct co-operation with a breaker drum supporting the inner tyre components with the inserts to be folded. The form rings can be moved into their envisaged position over the drum as part of the usual confectioning work at the desired point in time and form rigid abutment elements against the same. A small expansion of the drum brings the insert into engagement with the form rings. Immediately following the form rings are retracted away from the breaker drum into the resting position in order to commence the actual folding process.

DE 25 16 419 discloses a device for producing folded insert for a belt of a pneumatic vehicle tyre, wherein a ring is coaxially displaceable in relation to a drum onto which a cord embedded in a rubber mixture is wound. The ring encloses the drum at a distance and comprises a supporting edge with a reducible diameter to be pressed onto the wound cord along a circumferential folding line.

EP 1 767 337 discloses a method for building a radial tyre with an air-tight inner layer, at least one carcass insert, bulged drum segments with core profiles, side walls, a belt ply and a belt compound comprising at least two belt layers as well as a bandage, whereby the belt layers are first cylindrically built and splices on an expandable, cylindrical belt drum. A mechanically pre-constructed belt compound can be produced in a simple way when the belt layers are subsequently transferred onto a second, contoured belt drum and contoured by means of expansion and/or compression,

EP 0 468 738 discloses a process and belt forming drum for assembling a green tyre, wherein a cylindrical belt comprising a tread and a breaker and sidewalls are applied around a toroidally shaped tyre carcass on a tyre carcass building drum to assemble a green tyre. Fitting breaker cushions to the inner circumferential surfaces of the opposite edges portions of the breaker prior to applying the belt around the tyre carcass.

In the building of some models of tyres it is preferable that the ends of the layers forming the belt structure are turned up so as to avoid having free ends of the reinforcing cords. In fact, the latter could cause cracks between the belt structure and the carcass structure which would tend to propagate in radial direction, damaging the tyre structure.

Moreover, it is particularly useful to turn up the ends of the belt layers for performance reasons. In fact, it is known that the operation of turning up a belt layer on the layers radially external thereto, imparts greater reactivity and readiness of the tyre on a bend.

However, in order to achieve the above advantages the turning up operation must be carried out in an accurate manner.

The Applicant has found that while machines of the type described in EP 0 015 113 and JP 57098342 are aimed at achieving precise and well defined folding of tyre components, they may not achieve a good folding quality.

Moreover, the folding methods of the type described in EP 0 015 113 and in JP 57098342 do not pursue nor attain high production flexibility and productivity. In fact, in order to meet the current production requirements, it is not sufficient to obtain an accurate turning up of the belt structure, but it is necessary to insert the turning up operation in a context characterised by high daily productivity for tyres dimensionally differing from each other, and by flexibility. More precisely, by flexibility it is meant the possibility of using for each tyre elementary semi-finished products differing by type of elastomeric material or by type of textile or metal reinforcing cord.

The Applicant has therefore perceived that to sequentially build different types of tyres, in particular high performance tyres, with technological requirements very different from each other, keeping a high productivity and improving accuracy and flexibility of the belt layers turning up operations, it is necessary to use a building process through a building plant provided with a dedicated apparatus for turning up the belt layers which should be very flexible from the point of view of the materials used for the tyre being processed.

In particular, the Applicant has noted that if the above folding operation must be carried out between the layers forming the tyre belt structure while building the same, such dedicated apparatus must also be rapid and accurate both in the folding operations and in the inlet/outlet of the components to be folded.

The Applicant has further understood that having a turning up apparatus provided with an apposite turning up drum and abutment devices radially external to said turning up drum and axially adjustable relative thereto, it is possible to obtain very accurate turning up of the belt layers and above all, it is possible to turn up such layers exactly where desired.

Finally, the Applicant has found that placing an annular assembly comprising a plurality of belt layers on an auxiliary drum and defining a pair of folding lines, by actuating at least one axially adjustable abutment devices, the operation for turning up the radially inner belt layer on the radially outermost belt layer takes place rapidly, precisely and independently of the dimensions of the belt structure itself. In this way it is possible to obtain high performance tyres keeping high also productivity and technological flexibility.

More precisely, according to a first aspect thereof, the invention relates to a process for building tyres for vehicle wheels wherein each tyre comprises a carcass structure and a crown structure, said crown structure comprising a belt structure including a first radially inner belt layer and at least one second belt layer radially external to the first belt layer, said process comprising the steps of:
a) placing an annular assembly comprising a first radially inner belt layer and at least one second belt layer radially external to said first belt layer on at least one auxiliary turning up drum;
b) defining at least one pair of folding lines in axially opposite positions of said annular assembly by means of respective abutment devices radially external to said auxiliary turning up drum;
c) adjusting the axial position of said folding lines relative to the centre line plane Y-Y' of the auxiliary turning up drum;
d) turning up, at said folding lines, at least one part of end portions of said first belt layer axially protruding relative to said at least one second belt layer on said at least one second belt layer of said annular assembly.

The above process therefore overcomes the above problems of making complex components in the process for building a tyre (the belt structure with turned up belt layers) in a context of high productivity even for small production batches and of technological flexibility on each batch produced.

According to a second aspect thereof, the invention relates to an apparatus for building tyres for vehicle wheels, each tyre comprising a carcass structure and a crown structure, said crown structure comprising a belt structure including a first radially inner belt layer and at least one second belt layer radially external to the first belt layer, said apparatus comprising:
- at least one auxiliary turning up drum adapted for supporting an annular assembly, comprising a first radially inner belt layer and at least one second belt layer radially external to said first belt layer;
- a plurality of abutment devices, radially external to said auxiliary turning up drum adapted for defining at least one pair of folding lines in axially opposite positions of said annular assembly;
wherein said abutment devices are adjustable in axial direction relative to the centre line plane Y-Y' of the auxiliary turning up drum.

Carrying out the above process, said apparatus achieves the same advantages mentioned above.

The Applicant has further verified that since the building apparatus is provided with abutment devices radially external to the auxiliary drum and axially adjustable, it allows obtaining accurate turning up and thus high performance quality of the final product.

In fact, thanks to the axial adjustment of the abutment devices, the apparatus according to the present invention allows deciding the exact position wherein the ends of the first belt layers should be folded on at least one radially outer layer and thus obtain the desired turning up.

In accordance with a third aspect thereof, the invention relates to a plant for building tyres for vehicle wheels comprising:
- at least one carcass structure building line, said carcass structure comprising at least one carcass ply and a pair of annular anchoring structures;
- at least one crown structure building line, said crown structure comprising a belt structure and a tread band;
wherein the crown structure building line comprises at least one apparatus for building tyres as described above.

The present invention, in at least one of the above aspects thereof, can exhibit at least one of the following preferred features.

In a particularly preferred embodiment, said process provides that step a) is preceded by a step of:
f) picking up said annular assembly from at least one first building drum.

Providing the transfer of the annular assembly from a building drum to an auxiliary drum and the carrying out of the belt turning up step on such auxiliary drum, said process allows obviating the above disadvantages of low technological flexibility, while keeping a high productivity.

After step d), the process preferably provides a step of:
e) transferring the annular assembly on a second building drum.

In this way, the process is technologically even more flexible and efficient, since it allows choosing the most suitable drum for the type of operations to be performed.

As an alternative, step d) is followed by a step of:
e') transferring the annular assembly on said first building drum.

This is possible, and in that case advantageous, when the technological requirements are such as to require a building drum of the same type both for pre-turning up and post-turning up operations.

Advantageously, the building process comprises the further step of adjusting the radial position of said abutment devices, relative to said auxiliary turning up drum, preferably according to the thickness and/or the diameter of said annular assembly. This makes the process flexible as the dimensions of the tyre to be produced change.

According to a first embodiment of the process of the invention, the adjustment of the axial position of said folding lines comprises adjusting the axial position of at least one pair of contrast rollers relative to the centre line plane Y-Y' of the auxiliary turning up drum.

The step d) of turning up is preferably carried out substantially simultaneously to the rotation of the auxiliary turning up drum about the axis of rotation X-X' thereof.

Preferably, at least one between steps f), a) and e) is carried out by at least one transfer device.

According to a second embodiment of the building process of the invention, the adjustment of the axial position of the folding lines comprises adjusting the axial position of at least one pair of contrast elements of said transfer device relative to the centre line plane Y-Y' of the auxiliary turning up drum.

Advantageously, the step d) of turning up comprises the step of turning up at least a part of axially opposite end portions of said first radially inner belt layer on said second belt layer and on a third belt layer radially external to said second belt layer.

It is preferable that the building process further comprises the step g) of adjusting the diameter of said auxiliary turning up drum. This increases the process flexibility from the point of view of the dimensions of the tyre to be produced.

Preferably, said step g) is carried out before step a) of placing said annular assembly on at least said auxiliary turning up drum.

The process may further comprise the step g1) of adjusting the width of said auxiliary turning up drum. Within the present context, the term "width of the auxiliary drum" indicates the dimension developing along the axis of rotation X-X' of the auxiliary drum itself.

Preferably, said step g1) is carried out before step a) of placing said annular assembly on said at least one auxiliary turning up drum.

Preferably, said step g1) is carried out before step e) of transferring the annular assembly on a second building drum.

Preferably, said step g1) is carried out before step e') of transferring the annular assembly on the first building drum.

According to preferred embodiments, at least one between step a) of placing the annular assembly on at least one auxiliary turning up drum and step e) of transferring the annular assembly on a building drum is followed by a step of shaping the belt structure.

Preferably, at least one between step a) of placing the annular assembly on at least one auxiliary turning up drum and step e') of transferring the annular assembly on the first building drum is followed by a step of shaping the belt structure.

According to an embodiment of the building process, each folding line is substantially defined at the axial end of the radially outermost belt layer.

As an alternative, each folding line is defined in axially outer position relative to the axial end of the radially outermost belt layer.

According to one embodiment of the process of the invention, the step d) of turning up is substantially carried out simultaneously along the entire circumferential extension of each folding line.

Preferably, said step d) of turning up is carried out by at least one turning up device.

Preferably, said step d) comprises the step of adjusting the axial position of said turning up device relative to said auxiliary turning up drum.

Preferably, said step d) comprises the step of adjusting the radial position of said turning up device relative to said auxiliary turning up drum, preferably according to the thickness and/or the diameter of the annular assembly.

According to a particularly preferred embodiment of the invention, the building apparatus comprises at least one transfer device adapted for transferring said annular assembly from a building drum to said at least one auxiliary turning up drum and vice versa.

The Applicant has verified that since the building apparatus provides an auxiliary drum whereon the turning up operation is carried out which is separate from the building drum, and a transfer device to and from said auxiliary drum, it allows overcoming also the above disadvantages due to an efficient production of tyres dimensionally different from each other and to the technological flexibility required, since it is possible to select time by time the most suitable features of the drums for the type and performance of the tyre to be produced.

Preferably, the abutment devices of the building apparatus are adjustable also in radial direction relative to the auxiliary turning up drum.

Advantageously, said abutment devices comprise at least one pair of contrast rollers.

As an alternative, they comprise at least one pair of contrast elements of said transfer device.

In that case, the transfer device is adjustable in radial direction relative to the auxiliary turning up drum.

Preferably, the transfer device is adjustable in axial direction relative to the centre line plane Y-Y' of the auxiliary turning up drum.

Even more preferably, the contrast elements of the transfer device are adjustable in axial direction relative to the centre line plane Y-Y' of the auxiliary turning up drum.

According to preferred embodiments, the auxiliary turning up drum has an adjustable diameter.

Preferably, the auxiliary turning up drum has an adjustable width. In this context, the "width of the auxiliary drum" is intended as defined above.

Preferably, the apparatus further comprises a turning up device which is adjustable in axial direction relative to the auxiliary turning up drum.

Preferably, said turning up device is adjustable in radial direction.

According to one embodiment, said turning up device comprises at least one pair of turning up rollers, each turning up roller being adapted for being rotated about each folding line so as to turn up at least a part of each end portion of said first belt layer on said at least one second belt layer.

It is preferable that each turning up roller comprises a barrel roller driven in rotation by pushing devices.

According to one alternative embodiment, said turning up device comprises at least one pair of pressing elements circumferentially placed at axially opposite parts of the auxiliary turning up drum.

Preferably, each of said pressing elements is radially expansible relative to the axis of rotation X-X' of the auxiliary drum between a retracted position and an expanded position for turning up at least a part of each end portion of said first belt layer on said at least one second belt layer.

Advantageously, each of said pressing elements comprises a plurality of contact elements, placed along a circumference concentric to the axis of rotation X-X' of the auxiliary turning up drum, each contact element being telescopically sliding circumferentially relative to the adjacent contact element.

As an alternative, each of said pressing elements comprises a plurality of contact elements, placed along a circumference concentric to the axis of rotation X-X' of the auxiliary turning up drum, connected by a plurality of elastic devices.

The auxiliary turning up drum advantageously comprises a shaping surface.

Said shaping surface is preferably convex.

According to preferred embodiments, the transfer devices comprise a plurality of sectors.

According to a further embodiment, the first building drum coincides with said second building drum.

Preferably, the auxiliary turning up drum is geometrically different from the first building drum.

Even more preferably, the auxiliary turning up drum is geometrically different from the second building drum.

Further features and advantages of invention will appear more clearly from the following description of some preferred examples of production plants and processes according to the invention, made by way of an indicative non-limiting example with reference to the annexed drawings, wherein:
- figures 1a and 1b show an axial section view of a part of the tyre building apparatus according to a first embodiment of the invention in two subsequent steps of the building process according to the present invention;
- figure 2 shows an axial section view of a part of the tyre building apparatus according to a second embodiment of the invention;
- figures 3a - 3m schematically show the building apparatus of the invention during the different operating steps of the building process according to one embodiment of the present invention;
- figure 4 shows a side view of a turning up device of the building apparatus according to one embodiment of the invention;
- figure 5 shows a partial section view of a turning up device of the building apparatus according to an alternative embodiment of the invention; and
- figure 6 shows a schematic layout of a plant for building tyres for vehicle wheels wherein the process according to one embodiment of the present invention is carried out.

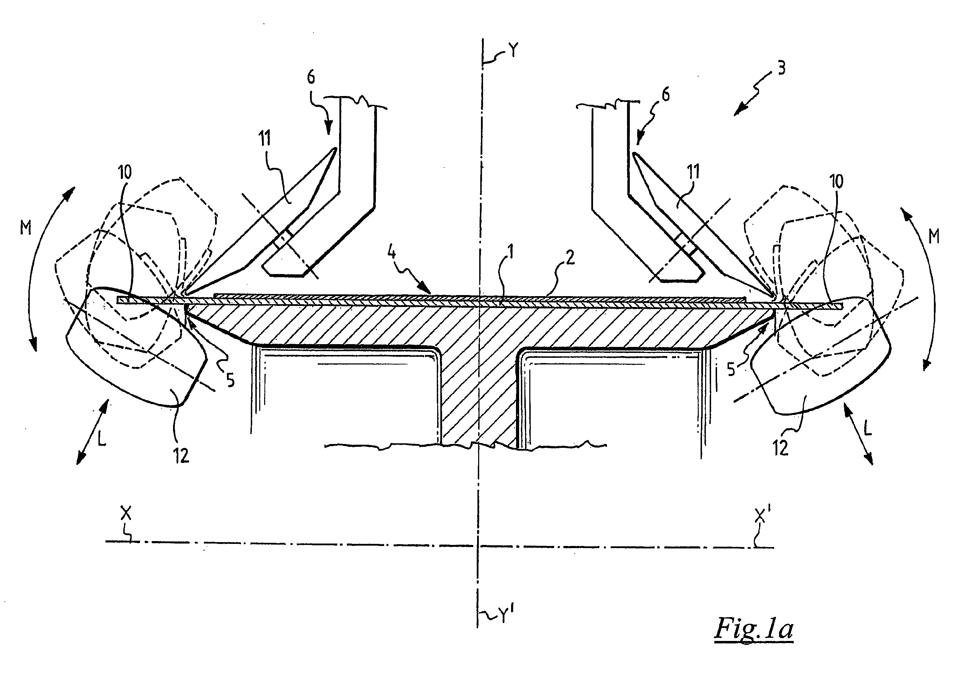

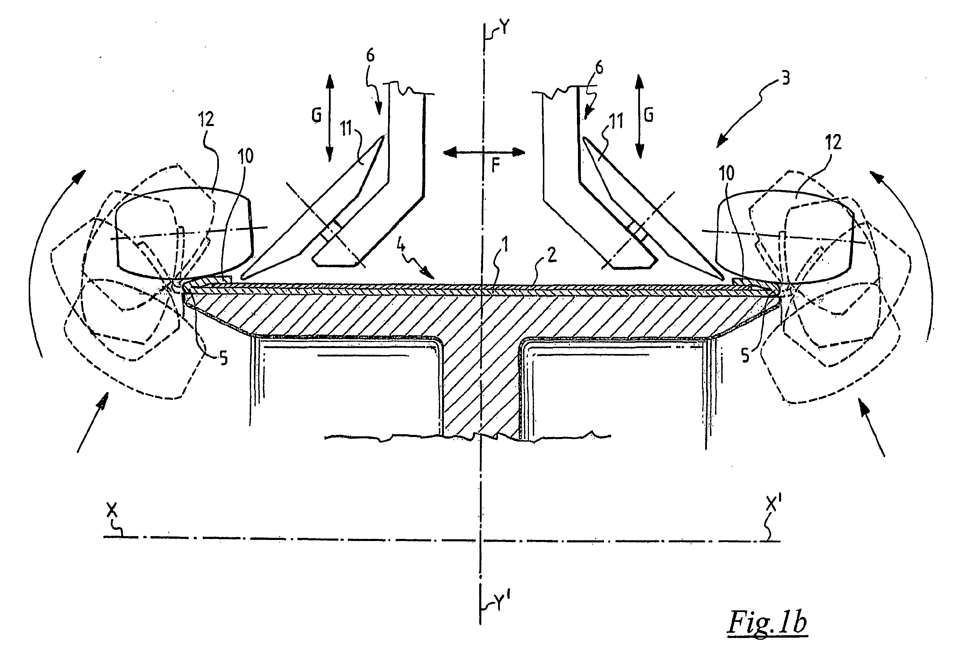

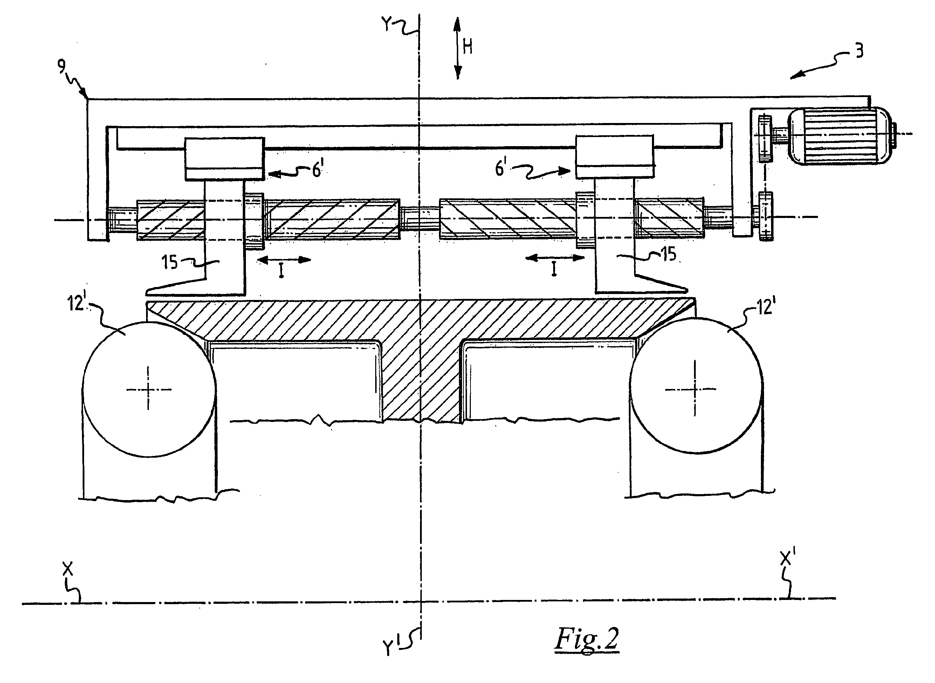

With reference to figures 1a, 1b and 2, reference numeral 3 globally indicates an apparatus of a building plant 20 for building tyres for vehicle wheels according to the present invention.

Each tyre built in the building plant 20 including apparatus 3 comprises a carcass structure exhibiting at least one carcass ply associated to an annular reinforcing structure and a crown structure comprising at least one belt structure which in turn up comprises a first radially inner belt layer 1 and at least one second belt layer 2 radially external to the first belt layer 1.

Apparatus 3 for building tyres according to the invention comprises at least one auxiliary turning up drum 8 adapted for supporting an annular assembly 4, comprising a first radially inner belt layer 1 and at least one second belt layer 2 radially external to said first belt layer 1.

According to preferred embodiments of the invention, such auxiliary turning up drum 8 is adjustable by diameter and/or height, that is, it is possible to adjust the dimensions thereof both radially and axially relative to the axis of rotation X-X' thereof.

According to the present invention, apparatus 3 also comprises a plurality of abutment devices 6; 6' radially external to the auxiliary turning up drum 8. They are adapted for defining at least one pair of folding lines 5 in axially opposite positions of said annular assembly 4, as shown in figures 1a and 1b. Such folding lines 5 define the exact position wherein ends 10 of the first belt layer 1 are turned up on the radially outer belt layer(s).

The abutment devices 6; 6' according to the present invention are adjustable in axial direction relative to a centre line plane Y-Y' of the auxiliary turning up drum 8, as shown by arrow F in figure 1b.

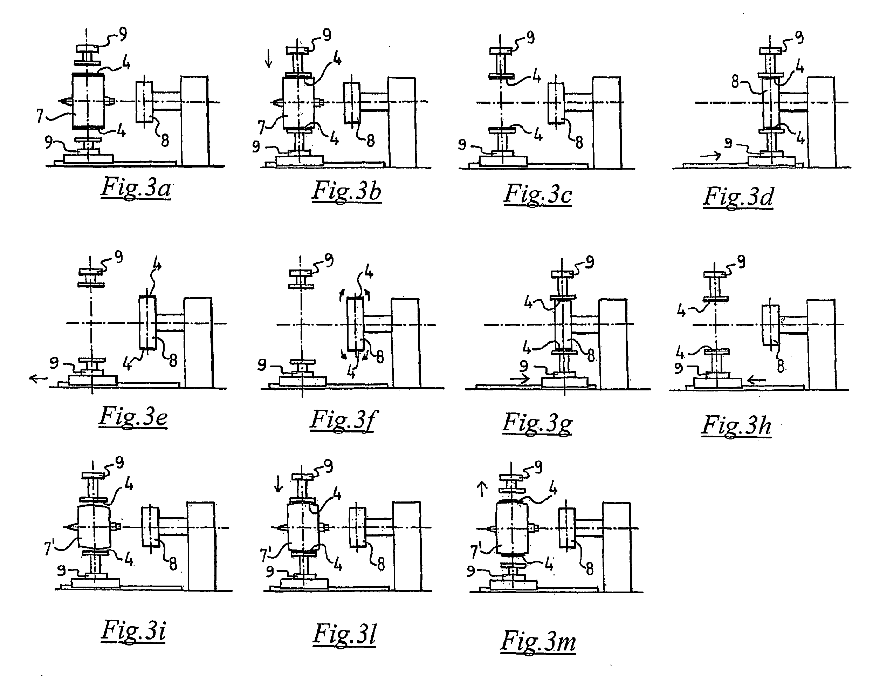

With particular reference to figure 2, and with reference now also to figures 3a - 3m, it is shown that apparatus 3, according to such preferred embodiments, comprises at least one transfer device 9. The latter is adapted for transferring the annular assembly 4 from a building drum7, 7' to said at least one auxiliary turning up drum 8 and vice versa.

Preferably, the transfer devices 9 comprise a plurality of sectors whose reciprocal position is adjustable according to the requirements.

The abutment devices 6; 6' are adjustable also in radial direction relative to the auxiliary turning up drum 8, as shown by arrow G in figure 1b.

In the first embodiment of the building apparatus 3, shown in figures 1a and 1b, the abutment devices 6 comprise at least one pair of contrast rollers 11.

While in the second embodiment, shown in figure 2, such abutment devices 6' comprise at least one pair of contrast elements 15 of said transfer device 9. That is, the abutment devices 6' are, in this case, integral with the transfer devices 9.

The latter are adjustable in radial direction relative to the auxiliary turning up drum 8 in both embodiments above. In fact, while this is visible only in the second embodiment (figure 2) by means of arrow H, the radial adjustment of the transfer devices 9 is also provided in the first embodiment (figures 1a and 1b), wherein the transfer devices 9 are not shown.

Moreover, in the second embodiment of apparatus 3 of the invention, the contrast elements 15 of the transfer device 9 are adjustable in axial direction relative to the centre line plane Y-Y' of the auxiliary turning up drum 8, as shown by arrows I of figure 2. Such feature may also be provided for the first embodiment.

Apparatus 3 further comprises a turning up device which is preferably adjustable in axial and optionally radial direction relative to the auxiliary turning up drum 8.

According to the first embodiment, said turning up device comprises at least one pair of turning up rollers 12, each being adapted for being rotated about each folding line 5 so as to turn up at least a part of each end portion 10 of said first belt layer 1 on said at least one second belt layer 2.

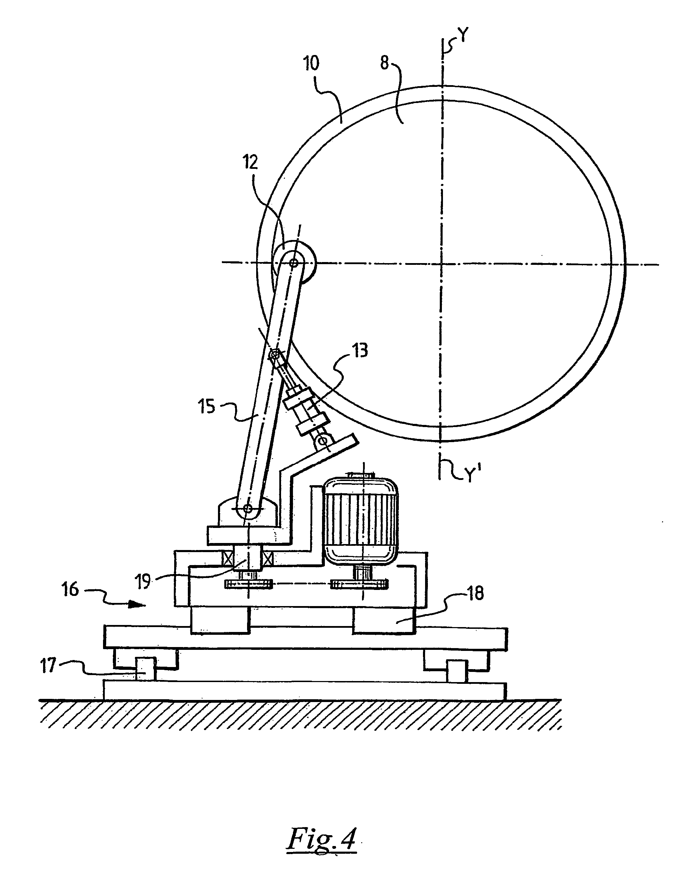

The operation of the turning up device, according to such first embodiment, is better shown in figure 4, which shows a side view from the right (with reference to figures 1a and 1b) of said turning up device in operating condition.

As illustrated in such figure 4, each turning up roller 12 comprises a barrel roller driven in rotation by special pushing devices 13. The latter are adapted for driving in rotation the turning up rollers 12 through a bar 15 rigidly connected with said turning up rollers 12 and to an adjustment unit 16.

The adjustment unit 16 comprises devices for adjusting the axial position 17 of the turning up rollers 12, devices for adjusting the radial position 18 of the turning up rollers 12 and devices for adjusting the rotation 19 of the turning up rollers 12.

The pushing devices 13 preferably comprise a pneumatic or hydraulic cylinder.

Such turning up device described with reference to the first embodiment, is also usable in a building apparatus 3 wherein the abutment devices 6' are integral with the transfer devices 9, that is, in an apparatus 3 of the type described in the second embodiment.

According to the second embodiment, shown in figure 2, the turning up device comprises at least one pair of pressing elements 12' circumferentially arranged at axially opposite parts of the auxiliary turning up drum 8.

Each of said pressing elements 12' is radially expansible relative to the axis of rotation X-X' of the auxiliary drum 8 between a retracted position and an expanded position for turning up at least a part of each end portion 10 of said first belt layer 1 on said at least one second belt layer 2.

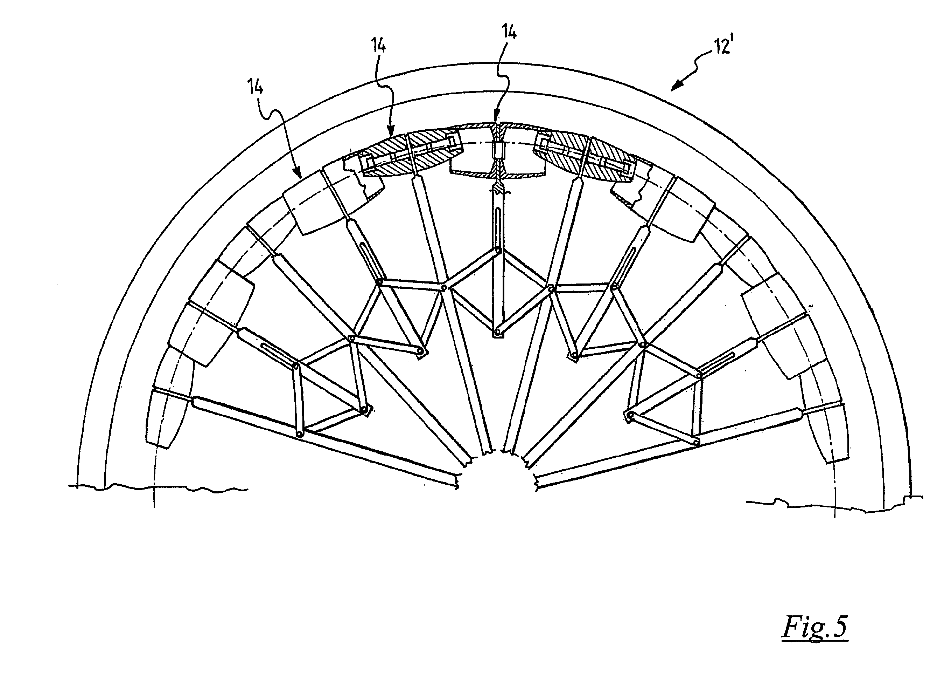

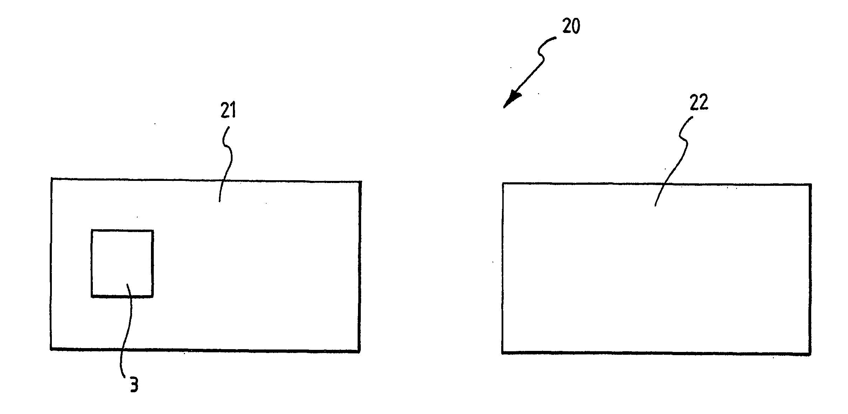

As shown in detail in figure 5, each of said pressing elements 12' comprises a plurality of contact elements 14, placed along a circumference concentric to the axis of rotation X-X' of the auxiliary turning up drum 8. Each contact element 14 is telescopically sliding circumferentially relative to the adjacent contact element 14.

According to an alternative embodiment not shown in the figures, each of said pressing elements 12' comprises a plurality of contact elements 14, placed along a circumference concentric to the axis of rotation X-X' of the auxiliary turning up drum 8, but connected to each other by a plurality of elastic devices.

According to preferred embodiments, the auxiliary turning up drum 8 comprises a shaping surface, preferably convex.

It is possible to provide that the first building drum7 coincides with the second building drum7' or that they are drums of the same type or of different type.

The auxiliary turning up drum 8 may be geometrically different from the first building drum7, if required and likewise, the same auxiliary turning up drum 8 may be geometrically different from the second building drum7', with the above advantages.

With reference now to figure 6, it is shown that the tyre building line 20 for vehicle wheels comprises:
- at least one carcass structure building line 22, said carcass structure comprising at least one carcass ply and a pair of annular reinforcing structures;
- at least one crown structure building line 21, said crown structure comprising a belt structure and a tread band.

According to the present invention, the crown structure building line 21 comprises at least one apparatus 3 for building tyres as described above.

With reference to the building apparatus 3 of the building plant 20, a preferred embodiment of a process for building tyres for vehicle wheels shall now be described, wherein each tyre comprises a carcass structure and a crown structure. The crown structure in turn comprises a belt structure including a first radially inner belt layer 1 and at least one second belt layer 2 radially external to the first belt layer 1.

According to a first step a), the process according to the invention provides placing an annular assembly 4, comprising a first radially inner belt layer 1 and at least one second radially outer belt layer 2, on at least one auxiliary turning up drum 8.

Afterwards, a step b) of defining at least one pair of folding lines 5 in axially opposite positions of said annular assembly 4 is carried out. Such step is carried out by respective abutment devices 6; 6' which are radially external to said auxiliary turning up drum 8.

The building process also comprises a step c) of adjusting the axial position of said folding lines (5) relative to a centre line plane Y-Y' of the auxiliary turning up drum 8.

Preferably, the process also comprises a step of adjusting the radial position of said abutment devices 6; 6' relative to said auxiliary turning up drum 8, preferably according to the thickness and/or the diameter of said annular assembly 4.

Once the folding lines have been defined, the process provides, according to a step d), the turning up, at said folding lines 5, of at least a part of end portions 10 of the first belt layer 1 axially protruding relative to said at least one second belt layer 2 on said at least one second belt layer 2 of the annular assembly 4.

Such step d) may comprise the step of turning up at least a part of axially opposite end portions 10 of said first radially inner belt layer 1 on said second belt layer 2 and on a third belt layer (not shown in the figures) radially external to said second belt layer 2.

Such step d) may additionally comprise also the turning up of said second belt layer 2 on said third belt layer.

Preferably, said step d) of turning up is carried out substantially simultaneously to the rotation of the auxiliary turning up drum 8 about the axis of rotation X-X' thereof.

According to a particularly preferred embodiment, step a) is preceded by a step f) of picking up the annular assembly 4 from at least one first building drum7 and step d) is followed by a step e) of transferring the annular assembly 4 on a second building drum7'.

An alternative embodiment provides, after step d), a step e') of transferring the annular assembly 4 on said first building drum 7.

According to the first embodiment shown in figures 1a and 1b, the adjustment of the axial position of said folding lines 5 comprises adjusting the axial position of at least one pair of contrast rollers 11 relative to the centre line plane Y-Y' of the auxiliary turning up drum 8.

Preferably, at least one between the above steps f), a) and e) is carried out by at least one transfer device 9.

In this case it is possible to provide that the adjustment of the axial position of said folding lines comprises adjusting the axial position of at least one pair of contrast elements 15 of said transfer device 9 relative to the centre line plane Y-Y' of the auxiliary turning up drum 8, as shown in the second embodiment illustrated in figure 2.

According to preferred embodiments, the tyre building process comprises the step g) of adjusting the diameter of the auxiliary turning up drum 8. Such step g) is carried out before step a) of placing the annular assembly 4 on the auxiliary turning up drum 8 and/or before step e) of transferring the annular assembly 4 on the second building drums7', or optionally before step e').

In that case, advantageously, the two ends of said auxiliary turning up drum 8 correspond to the folding lines of the belt layer(s) to be turned up.

The process further comprises the step g1) of adjusting the width of said auxiliary turning up drum 8. As mentioned before, the term "width of the auxiliary drum" indicates the dimension that extends along the entire axis of rotation X-X' thereof.

When provided, said step g1) is carried out before step a) of placing the annular assembly 4 on the auxiliary turning up drum 8 and/or before step e) of transferring the annular assembly 4 on the second building drum7', or optionally before step e').

Preferably, step a) of placing the annular assembly 4 on at least one auxiliary turning up drum 8 and/or step e) of transferring the annular assembly 4 on the second building drum7' is followed by a step of shaping the belt structure.

Figures 1a and 1b show how each folding line 5 is defined in axially outer position relative to the axial end of the radially outermost belt layer, however such folding line 5 may be defined substantially at the axial end of the radially outermost axial end.

In fact, the process of the present invention allows to fold ends 10 where desired, as mentioned before.

According to the second embodiment shown in figure 2, the step d) of turning up is substantially carried out simultaneously along the entire circumferential extension of each folding line 5 and is carried out by at least one turning up device.

In that case, said step d) of turning up comprises the step of adjusting the axial position of said turning up device relative to the auxiliary turning up drum 8 and optionally adjusting the radial position of said turning up device relative to the auxiliary drum 8, preferably according to the thickness and/or the diameter of the annular assembly 4.

Preferably, the turning up device comprises at least one pair of turning up rollers 12, each turning up roller 12 being adapted for being rotated about each folding line 5 so as to turn up at least one part of each end portion 10 of said first belt layer 1 on said at least one second belt layer 2 of the belt structure.

As an alternative, the turning up device comprises at least one pair of pressing elements 12' circumferentially placed at axially opposite parts of the auxiliary turning up drum 8.

With particular reference to figures 3a - 3m, the tyre building process in steady operation conditions according to a preferred embodiment of the invention shall now be described.

Figure 3a shows an annular assembly 4 built on a first building drum7, before step f) of picking up said annular assembly 4 from said drum.

Figure 3b shows how the transfer devices 9 are radially adjusted up to contact the annular assembly 4, thus starting step f).

The subsequent removal of the first building drum7 shown in figure 3c, starts the step a) of placing the annular assembly 4 on the auxiliary drum 8. In fact, during this step, the annular assembly 4 is separated from the building drum7 and retained by the transfer devices 9, to be then transferred to the auxiliary drum 8 during the sequential steps shown in figures 3d and 3e.

Figure 3d shows how the transfer devices 9, whereto the annular assembly 4 is associated, shift in the direction indicated by the arrow to place at the auxiliary drum 8. In this position, the annular assembly contacts such auxiliary drum 8 and is separated from the transfer devices by shifting of the same towards the starting position thereof (figure 3e).

Preferably, the pick up of the annular assembly 4 by the auxiliary turning up drum 8 takes place by the radial expansion of the sectors of said auxiliary drum 8.

At this point, the step a) of placing the annular assembly 4 on the auxiliary drum 8 is completed.

Afterwards, steps b), c) and d) are carried out. The latter is schematically shown in figure 3f by the arrows.

In order to better illustrate such two steps, reference must be made to figures 1a and 1b.

In particular, figure 1a shows how the abutment devices 6, after being suitably adjusted, define the folding lines 5, along which ends 10 of the first belt layer 1 will be folded on the second belt layer 2, by means of the turning up rollers 12.

The latter are adjusted radially and axially, as shown by arrow L, and then rotated in the direction indicated by arrow M, for carrying out the step d) of turning up. Figure 1b shows that while ends 10 are folded by the turning up rollers 12, the abutment devices 6 are retracted so as to leave ends 10 of the first belt layer 1 to overlap at least partly the second belt layer 2 and the turning up operation is completed.

In figure 3g, the step e) of transferring the annular assembly 4 on a second building drum7' starts. In such figure, in fact, it is shown how the transfer devices 9 shift at the auxiliary drum 8 and are radially adjusted until they contact the annular assembly 4 with the turned up ends.

Figure 3h shows how the transfer devices 9 pick up the annular assembly 4 from the auxiliary drum 8 and shift towards the initial position thereof.

In figure 3i, a second building drum7', preferably geometrically different from the first building drum7, is placed at the transfer devices 9.

In figure 3l, the transfer devices 9 whereto the annular assembly 4 is associated, are radially adjusted up to contact the second building drum 7'. As an alternative, by the radial expansion of the sectors of the second building drum7' the pick up of the annular assembly 4 by the same building drum7' is allowed.

In figure 3m, the transfer devices 9 radially move away from the second auxiliary drum 7' unloading the annular assembly 4 thereon and thus completing step e).

## Claims

1. Process for building tyres for vehicle wheels wherein each tyre comprises a carcass structure and a crown structure, said crown structure comprising a belt structure including a first radially inner belt layer (1) and at least one second belt layer (2) radially external to the first belt layer (1), said process comprising the steps of:
a) placing an annular assembly (4) comprising a first radially inner belt layer (1) and at least one second radially outer belt layer (2) on at least one auxiliary turning up drum (8);
b) defining at least one pair of folding lines (5) in axially opposite positions of said annular assembly (4) by respective abutment devices (6; 6') radially external to said auxiliary tamping up drum (8);
c) adjusting the axial position of said folding lines (5) relative to the centre line plane Y-Y' of the auxiliary turning up drum (8);
d) turning up, at said folding lines (5), at least a part of end portions (10) of said first belt layer (1) axially protruding relative to said at least one second belt layer (2) on said at least one second belt layer (2) of said annular assembly (4).

2. Process for building tyres according to claim 1, wherein step a) is preceded by a step of:
f) picking up said annular assembly (4) from at least one first building drum (7).

3. Process for building tyres according to claim 2, wherein step d) is followed by a step of:
e) transferring the annular assembly (4) on a second building drum (7').

4. Process for building tyres according to claim 2, wherein step d) is followed by a step of:
e') transferring the annular assembly (4) on said first building drum (7).

5. Process for building tyres according to any one of the previous claims, wherein the adjustment of the axial position of said folding lines (5) comprises adjusting the axial position of at least one pair of contrast rollers (11) relative to the centre line plane Y'-'Y'' of the auxiliary turning up drum (8).

6. Process for building tyres according to any ane of the previous claims, wherein said step d) of turning up is carried out substantially simultaneously to the rotation of the auxiliary turning up drum (8) about the axis of rotation X-X' thereof.

7. Process for building tyres according to any one of claims 3 to 5, wherein at least one between steps f), a) and e) is carried out by at least one transfer device (9).

8. Process for building tyres according to claim 7, wherein the adjustment of the axial position of the folding lines (5) comprises adjusting the axial position of at least one pair of contrast elements (15) of said transfer device (9) relative to the centre line plane Y-Y' of the auxiliary turning up drum (8).

9. Process for building tyres according to any one of the previous claims, wherein the step d) of turning up comprises the step of turning up at least a part of axially opposite end portions (10) of said first radially inner belt layer (1) on said second belt layer (2) and on a third belt layer (3) radially external to said second belt layer (2).

10. Process for building tyres according to any one of the previous claims, further comprising the step g) of adjusting the diameter of said auxiliary turning up drum (8).

11. Process for building tyres according to claim 10, wherein said step g) is carried out before step a) of placing said annular assembly (4) on at least said auxiliary turning up drum (8).

12. Process for building tyres according to any one of the previous claims, further comprising the step g1) of adjusting the width of said auxiliary turning up drum (8).

13. Process for building tyres according to claim 12, wherein said step g1) is carried out before step a) of placing said annular assembly (4) on said at least one auxiliary turning up drum (8).

14. Process for building tyres according to claim 3 or any one of claims 4 to 13, when dependent on claim 3, wherein at least one between step a) of placing the annular assembly (4) on at least one auxiliary turning up drum (8) and step e) of transferring the annular assembly (4) on a second building drum (7') is followed by a step of shaping the belt structure.

15. Process for building tyres according to claim 4 or any one of claims 5 to 14, when dependent on claim 4, wherein at least one between step a) of placing the annular assembly (4) on at least one auxiliary turning up drum (8) and step e') of transferring the annular assembly (4) on the first building drum (7) is followed by a step of shaping the belt structure.

16. Apparatus (3) for building tyres for vehicle wheels, each tyre comprising a carcass structure and a crown structure, said crown structure comprising a belt structure including a first radially inner belt layer (1) and at least one second belt layer (2) radially external to the first belt layer (1), said apparatus (3) comprising:
- at least one auxiliaiy turning up drum (8) adapted for supporting an annular assembly (4), comprising a first radially inner belt layer (1) and at least one second belt layer (2) radially external to said first belt layer (1);
- a plurality of abutment devices (6; 6'), radially external to said auxiliary turning up drum (8) adapted for defining at least one pair of folding lines (5) in axially opposite positions of said annular assembly (4);
**characterised in that** said abutment devices (6; 6') are adjustable in axial direction relative to the centre line plane Y-Y' of the auxiliary turning up drum (8).

17. Apparatus (3) according to claim 16, comprising at least one transfer device (9) adapted for transferring said annular assembly (4) from a building drum (7; 7') to said at least one auxiliary turning up drum (8) and vice versa.

18. Apparatus (3) according to claim 16 or 17, wherein said abutment devices (6) comprises at least one pair of contrast rollers (11).

19. Apparatus (3) according to claim 18 when dependent on claim 17, wherein said abutment devices (6') comprises at least one pair of contrast rollers (15) of said transfer device (9).

20. Apparatus (3) according to claim 17 or any one of claims 18 or 19, when dependent on 17, wherein the transfer device (9) is adjustable in radial direction relative to the auxiliary turning up drum (8).

21. Apparatus (3) according to claim 19, wherein the contrast elements (15) of the transfer device (9) are adjustable in axial direction relative to the centre line plane Y-Y' of the auxiliary turning up drum (8).

22. Apparatus (3) according to any one of claims 16 to 21, further comprising a turning up device adjustable in radial direction relative to said auxiliary turning up drum (8).

23. Apparatus (3) according to claim 22, wherein said turning up device comprises at least one pair of turning up rollers (12), each turning up roller (12) being adapted for being rotated about each folding line (5) so as to turn up at least a part of each end portion (10) of said first belt layer (1) on said at least one second belt layer (2).

24. Apparatus (3) according to claim 22, wherein said turning up device comprises at least one pair of pressing elements (12') circumferentially placed at axially opposite parts of the auxiliary turning up drum (8).

25. Plant (20) for building tyres for vehicle wheels comprising:
- at least one carcass structure building line (22), said carcass structure comprising at least one carcass ply and a pair of annular anchoring structures;
- at least one crown structure building line (21), said crown structure comprising a belt structure and a tread band;
wherein the crown structure building line (21) comprises at least one apparatus (3) for building tyres according to any one of claims 16 to 24.

## Patentansprüche

1. Verfahren zum Herstellen von Reifen für Fahrzeugräder, bei dem jeder Reifen eine Karkassenstruktur und eine Zenitstruktur aufweist, wobei die Zenitstruktur eine Gürtelstruktur mit einer ersten radial inneren Gürtelschicht (1) und wenigstens einer zweiten Gürtelschicht (2) aufweist, die radial außerhalb der ersten Gürtelschicht (1) ist, wobei das Verfahren als Schritte aufweist:
a) das Anordnen einer ringförmigen Anordnung (4) mit einer ersten radial inneren Gürtelschicht (1) und wenigstens einer zweiten radial äußeren Gürtelschicht (2) an wenigstens einer Hilfsherumbiegetrommel (8);
b) das Definierten wenigstens eines Paars an Falzlinien (5) an axial gegenüberliegenden Positionen der ringförmigen Anordnung (4) durch jeweilige Anlageeinrichtungen (6, 6'), die axial außerhalb der Hilfsherumbiegetrommel (8) sind;
c) das Einstellen der axialen Position der Falzlinien (5) in Bezug auf die Mittellinienebene Y-Y' der Hilfsherumbiegetrommel (8);
d) das Herumbiegen wenigstens eines Teils der Endabschnitte (10) der ersten Gürtelschicht (1), die axial in Bezug auf die wenigstens eine zweite Gürtelschicht (2) hervorragen, bei den Falzlinien (5) auf die wenigstens eine zweite Gürtelschicht (2) der ringförmigen Anordnung (4).

2. Verfahren zum Herstellen von Reifen nach Anspruch 1, bei dem Schritt a) als Schritt vorangeht:
f) das Aufheben der ringförmigen Anordnung (4) von wenigstens einer ersten Herstelltrommel (7).

3. Verfahren zum Herstellen von Reifen nach Anspruch 2, bei dem sich an Schritt d) als Schritt anschließt:
e) das Übertragen der ringförmigen Anordnung (4) auf eine zweite Herstelltrommel (7').

4. Verfahren zum Herstellen von Reifen nach Anspruch 2, bei dem sich an Schritt d) als Schritt anschließt:
e') das Übertragen der ringförmigen Anordnung (4) auf die erste Herstelltrommel (7).

5. Verfahren zum Herstellen von Reifen nach einem der vorhergehenden Ansprüche, bei dem das Einstellen der axialen Position der Falzlinien (5) das Einstellen der axialen Position wenigstens eines Paars an Gegendruckrollen (11) in Bezug auf die Mittellinienebene Y-Y' der Hilfsherumbiegetrommel (8) aufweist.

6. Verfahren zum Herstellen von Reifen nach einem der vorhergehenden Ansprüche, bei dem der Schritt d) des Herumbiegens im Wesentlichen gleichzeitig zu der Drehung der Hilfsherumbiegetrommel (8) um deren Drehachse X-X' ausgeführt wird.

7. Verfahren zum Herstellen von Reifen nach einem der Ansprüche 3 bis 5, bei dem wenigstens einer unter den Schritten f), a) und e) durch wenigstens eine Übertragungseinrichtung (9) ausgeführt wird.

8. Verfahren zum Herstellen von Reifen nach Anspruch 7, bei dem das Einstellen der axialen Position der Falzlinien (5) das Einstellen der axialen Position wenigstens eines Paars an Gegendruckelementen (15) der Übertragungseinrichtung (9) in Bezug auf die Mittellinienebene Y-Y' der Hilfsherumbiegetrommel (8) aufweist.

9. Verfahren zum Herstellen von Reifen nach einem der vorhergehenden Ansprüche, bei dem der Schritt d) des Herumbiegens den Schritt des Herumbiegens wenigstens eines Teils von axial gegenüberliegenden Endabschnitten (10) der ersten radial inneren Gürtelschicht (1) auf die zweite Gürtelschicht (2) und auf eine dritte Gürtelschicht (3), die radial außerhalb der zweiten Gürtelschicht (2) ist, aufweist.

10. Verfahren zum Herstellen von Reifen nach einem der vorhergehenden Ansprüche, ferner mit dem Schritt g) des Einstellens des Durchmessers der Hilfsherumbiegetrommel (8).

11. Verfahren zum Herstellen von Reifen nach Anspruch 10, bei dem der Schritt g) vor Schritt a) des Anordnens der ringförmigen Anordnung (4) auf wenigstens der Hilfsherumbiegetrommel (8) ausgeführt wird.

12. Verfahren zum Herstellen von Reifen nach einem der vorhergehenden Ansprüche, ferner mit dem Schritt g1) des Einstellens der Breite der Hilfsherumbiegetrommel (8).

13. Verfahren zum Herstellen von Reifen nach Anspruch 12, bei dem der Schritt g1) vor Schritt a) des Anordnens der ringförmigen Anordnung (4) auf der wenigstens einen Hilfsherumbiegetrommel (8) ausgeführt wird.

14. Verfahren zum Herstellen von Reifen nach Anspruch 3 oder nach einem der Ansprüche 4 bis 13, sofern von Anspruch 3 abhängig, bei dem Schritt a) des Anordnens der ringförmigen Anordnung (4) auf wenigstens einer Hilfsherumbiegetrommel (8) und/oder Schritt e) des Übertragens der ringförmigen Anordnung (4) auf eine zweite Herstelltrommel (7') von einem Schritt des Formens der Gürtelstruktur gefolgt wird.

15. Verfahren zum Herstellen von Reifen nach Anspruch 4 oder einem der Ansprüche 5 bis 14, sofern von Anspruch 4 abhängig, bei dem Schritt a) des Anordnens der ringförmigen Anordnung (4) auf wenigstens einer Hilfsherumbiegetrommel (8) und/oder Schritt e') des Übertragens der ringförmigen Anordnung (4) auf die erste Herstelltrommel (7) von einem Schritt des Formens der Gürtelstruktur gefolgt wird.

16. Vorrichtung (3) zum Herstellen von Reifen für Fahrzeugräder, wobei jeder Reifen eine Karkassenstruktur und eine Zenitstruktur aufweist, wobei die Zenitstruktur eine Gürtelstruktur mit einer ersten radial inneren Gürtelschicht (1) und wenigstens einer zweiten Gürtelschicht (2) radial außerhalb der ersten Gürtelschicht (1) aufweist, die Vorrichtung (3) mit:
- wenigstens einer Hilfsherumbiegetrommel (8), die dafür angepasst ist, eine ringförmige Anordnung (4) mit einer ersten radial inneren Gürtelschicht (1) und wenigstens einer zweiten Gürtelschicht (2) radial außerhalb der ersten Gürtelschicht (1) abzustützen;
- mehreren Anlageeinrichtungen (6, 6'), die radial außerhalb der Hilfsherumbiegetrommel (8) sind, die dafür angepasst sind, wenigstens ein Paar an Falzlinien (5) an axial gegenüberliegenden Positionen der ringförmigen Anordnung (4) zu definieren;
**dadurch gekennzeichnet, dass** die Anlageeinrichtungen (6, 6') in einer Axialrichtung in Bezug auf die Mittellinienebene Y-Y' der Hilfsherumbiegetrommel (8) einstellbar sind.

17. Vorrichtung (3) nach Anspruch 16, mit wenigstens einer Übertragungseinrichtung (9), die dafür angepasst ist, die ringförmige Anordnung (4) von einer Herstellstrommel (7, 7') auf die wenigstens eine Hilfsherumbiegetrommel (8) und umgekehrt zu übertragen.

18. Vorrichtung (3) nach Anspruch 16 oder 17, bei dem die Anlageeinrichtungen (6) wenigstens ein Paar an Gegendruckrollen (11) aufweist.

19. Vorrichtung (3) nach Anspruch 18, sofern von Anspruch 17 abhängig, bei dem die Anlageeinrichtungen (6') wenigstens ein Paar Gegendruckrollen (15) der Übertragungseinrichtung (9) auf weisen.

20. Vorrichtung (3) nach Anspruch 17 oder Anspruch 18 oder 19, sofern von Anspruch 17 abhängig, bei dem die Übertragungseinrichtung (9) in der Radialrichtung in Bezug auf die Hilfsherumbiegetrommel (8) einstellbar ist.

21. Vorrichtung (3) nach Anspruch 19, bei der die Gegendruckelemente (15) der Übertragungseinrichtung (9) in der Axialrichtung in Bezug auf die Mittellinienebene Y-Y' der Hilfsherumbiegetrommel (8) einstellbar sind.

22. Vorrichtung (3) nach einem der Ansprüche 16 bis 21, ferner mit einer Herumbiegeeinrichtung, die in der Radialrichtung in Bezug auf die Hilfsherumbiegetrommel (8) einstellbar ist.

23. Vorrichtung (3) nach Anspruch 22, bei der die Herumbiegeeinrichtung wenigstens ein Paar Herumbiegerollen (12) aufweist, wobei jede Herumbiegerolle (12) dafür angepasst ist, um jede Falzlinie (5) so gedreht zu werden, dass sie wenigstens einen Teil jedes Endabschnitts (10) der ersten Gürtelschicht (1) auf die wenigstens eine zweite Gürtelschicht (2) herumbiegt.

24. Vorrichtung (3) nach Anspruch 22, bei der die Herumbiegeeinrichtung wenigstens ein Paar Drückelemente (12') aufweist, die umfänglich an axial gegenüberliegenden Teilen der Hilfsherumbiegetrommel (8) angeordnet sind.

25. Fabrik (20) zum Herstellen von Reifen für Fahrzeugräder mit:
- wenigstens einer Herstellstraße für Karkassenstrukturen (22), wobei die Karkassenstruktur wenigstens eine Karkassenlage und ein Paar ringförmiger Verankerungsstrükturen aufweist;
- wenigstens eine Herstellstraße für Zenitstrukturen (21), wobei die Zenitstruktur eine Gürtelstruktur und ein Laufflächenband aufweist;
wobei die Herstellstraße für Zenitstrukturen (21) wenigstens eine Vorrichtung (3) zum Herstellen von Reifen nach einem der Ansprüche 16 bis 24 aufweist.

## Revendications

1. Procédé pour fabriquer des pneus pour roues de véhicule dans lequel chaque pneu comprend une structure de carcasse et une structure de couronne, ladite structure de couronne comprenant une structure de ceinture incluant une première couche de ceinture radialement interne (1) et au moins une seconde couche de ceinture (2) radialement externe à la première couche de ceinture (1), ledit procédé comprenant les étapes de :
a) placement d'un assemblage annulaire (4) comprenant une première couche de ceinture interne (1) et au moins une seconde couche de ceinture radialement externe (2) sur au moins un tambour tournant auxiliaire (8) ;
b) définition d'au moins une paire de lignes de pliage (5) en des positions axlalement opposées audit assemblage annulaire (4) par des dispositifs de butée respectifs (6 ; 6') radialement externe audit tambour tournant auxiliaire (8) ;
c) réglage de la position axiale desdites lignes de pliage (5) par rapport au plan médian Y-Y' du tambour tournant auxiliaire (8) ;
d) rotation, en lesdites lignes de pliage (5), d'au moins une partie de portions d'extrémité (10) de ladite première couche de ceinture (1) axialement en saillie par rapport à ladite au moins un seconde couche de ceinture (2) sur ladite au moins une seconde couche de ceinture (2) dudit assemblage annulaire (4).

2. Procédé pour fabriquer des pneus selon la revendication 1, dans lequel l'étape a) est précédée par une étape de :
f) prise dudit assemblage annulaire (4) à partir d'au moins un premier tambour de fabrication (7).

3. Procédé pour fabriquer des pneus selon la revendication 2, dans lequel l'étape d) est suivie d'une étape de :
e) transfert de l'assemblage annulaire (4) sur un second tambour de fabrication (7').

4. Procédé de fabrication selon la revendication 2, dans lequel l'étape d) est suivie d'une étape de :
e') transfert de l'assemblage annulaire (4) sur ledit tambour de fabrication (7).

5. Procédé pour fabriquer des pneus selon l'une quelconque des revendications précédentes, dans lequel le réglage de la position axiale desdites lignes de pliage comprend un réglage de la position axiale d'au moins une paire de rouleaux de contraste (11) par rapport au plan médian Y-Y' du tambour tournant auxiliaire (8).

6. Procédé pour fabriquer des pour fabriquer des pneus selon l'une quelconque des revendications précédentes, dans lequel ladite étape d) de rotation est réalisée sensiblement simultanément à la rotation du tambour tournant auxiliaire (8) autour de son axe de rotation X-X'.

7. Procédé pour fabriquer des pneus selon l'une quelconque des revendications 3 à 5, dans lequel au moins une des étapes f), a) et e) est réalisée par au moins un dispositif de transfert (9).

8. Procédé pour fabriquer des pneus selon la revendication 7, dans lequel le réglage de la position axiale des lignes de pliage (5) comprend un réglage de la position axiale d'au moins une paire d'éléments de contraste (15) dudit dispositif de transfert (9) par rapport au plan médian Y-Y' du tambour tournant auxiliaire (8).

9. Procédé pour fabriquer des pneus selon l'une quelconque des revendications précédentes, dans lequel l'étape d) de rotation comprend l'étape de rotation d'au moins une partie des parties d'extrémité axialement opposées (10) de ladite première couche de ceinture radialement interne (1) sur ladite seconde couche de ceinture (2) et sur une troisième couche de ceinture (3) radialement externe à ladite seconde couche de ceinture (2).

10. Procédé pour fabriquer des pneus selon l'une quelconque des revendications précédentes, comprenant en outre l'étape g) de réglage du diamètre dudit tambour tournant auxiliaire (8).

11. Procède pour fabriquer des pneus selon la revendication 10, dans lequel ladite étape g) est réalisée avant l'étape (a) de placement dudit assemblage annulaire (4) sur au moins ledit tambour tournant auxiliaire (8).

12. Procédé pour fabriquer des pneus selon l'une quelconque des revendications précédentes, comprenant en outre l'étape g1) de réglage de la largeur dudit tambour tournant auxiliaire (8).

13. Procédé pour fabriquer des pneus selon la revendication 12, dans lequel ladite étape g1) est réalisée avant l'étape a) de placement dudit assemblage annulaire (4) sur au moins ledit tambour tournant auxiliaire (8).

14. Procédé pour fabriquer des pneus selon la revendication 3 ou l'une quelconque des revendications 4 à 13, lorsque dépendante de la revendication 3, dans lequel au moins une des étapes parmi l'étape (a) de placement dudit assemblage annulaire (4) sur au moins ledit tambour tournant auxiliaire (8) et l'étape e) de transfert de l'assemblage annulaire (4) sur un second tambour de fabrication (7') est suivie d'une étape de mise en forme de la structure de ceinture.

15. Procédé pour fabriquer des pneu selon la revendication 4 ou l'une des revendications 5 à 14, lorsque dépendante de la revendication 4, dans lequel au moins une des étapes parmi l'étape (a) de placement dudit assemblage annulaire (4) sur au moins ledit tambour tournant auxiliaire (8) et l'étape (e') de transfert de l'assemblage annulaire (4) sur le premier tambour de fabrication (7) est suivie d'une étape de mise en forme de la structure de ceinture.

16. Appareil (3) pour fabriquer des pneus pour roues de véhicule, chaque pneu comprenant une structure de carcasse et une structure de couronne, ladite structure de couronne comprenant une structure de ceinture incluant une première couche de ceinture radialement interne (1) et au moins une seconde couche de ceinture (2) radialement externe à la première couche de ceinture (1), ledit appareil (3) comprenant :
- au moins un tambour tournant auxiliaire (8) adapté pour supporter un assemblage annulaire (4), comprenant une première couche de ceinture radialement interne (1) et au moins une seconde couche de ceinture (2) radialement externe à ladite première couche de ceinture (1) ;
- un pluralité de dispositifs de butée (6 ; 6'), radialement externes audit tambour tournant auxiliaire (8) adapté pour définir au moins une paire de lignes de pliage (5) en des positions axialement opposées dudit assemblage annulaire (4) ;
**caractérisé en ce que** lesdits dispositifs de butée (6 ; 6') sont réglables dans une direction axiale par rapport au plan médian Y-Y' du tambour tournant auxiliaire (8).

17. Appareil (3) selon la revendication 16, comprenant au moins un dispositif de transfert (9) adapté pour transférer ledit assemblage annulaire (4) d'un tambour de fabrication (9) à au moins un tambour tournant auxiliaire (8) et vice versa.

18. Appareil (3) selon l'une des revendications 16 ou 17, dans lequel lesdits dispositifs de butée (6) comprennent au moins une paire de rouleaux de contraste (11).

19. Appareil (3) selon la revendication 18 lorsque dépendante de la revendication 17, dans lequel lesdits dispositifs de butée (6') comprennent au moins un paire de rouleaux de contraste (15) dudit dispositif de transfert (9).

20. Appareil (3) selon la revendication 17 ou l'une quelconque des revendications 18 à 19, lorsque dépendante de la revendication 17, dans lequel l'élément de transfert (9) est réglable dans une direction radiale par rapport au tambour tournant auxiliaire (8).

21. Appareil (3) selon la revendication 19, dans lequel les éléments de contraste (15) du dispositif de transfert (9) sont réglables dans une direction axiale par rapport au plan médian Y-Y' du tambour tournant auxiliaire (8).

22. Appareil (3) selon l'une des revendications 16 à 21, comprenant en outre un dispositif tournant réglable dans une direction radiale par rapport au tambour tournant auxiliaire (8).

23. Appareil (3) selon la revendication 22, dans lequel ledit dispositif tournant comprend au moins un paire de rouleaux tournants (12), chaque rouleau tournant (12) étant adapté pour être en rotation autour de chaque ligne de pliage (5) pour faire tourner au moins une partie de chaque portion d'extrémité (10) de ladite première couche de ceinture (1) sur ladite au moins une seconde couche de ceinture (2).

24. Appareil (4) selon la revendication 22, dans lequel ledit dispositif tournant comprend au moins une paire d'éléments de pression (12') placée circonférentiellement en des parties axialement opposées du tambour tournant auxiliaire (8).

25. Installation (20) pour fabriquer des pneus pour roues de véhicule comprenant :
- au moins une ligne de fabrication de structure de carcasse (22), ladite structure de carcasse comprenant au moins une nappe de carcasse et une paire de structures d'ancrage annulaire ;
- au moins une ligne de fabrication de structure de couronne (21), ladite structure de couronne comprenant une structure de courroie et une bande de roulement ;
dans laquelle la ligne de fabrication de structure de couronne (21) comprend au moins un appareil (3) pour fabriquer des pneus selon l'une quelconque des revendications 16 à 24.
